# EUROPÄISCHE PATENTSCHRIFT

(11) **EP 2 063 109 B1**
(45) Veröffentlichungstag und Bekanntmachung des Hinweises auf die Patenterteilung: **11.04.2012**
(21) Anmeldenummer: 07022585.9
(22) Anmeldetag: 21.11.2007
(51) Int. Cl.: F03D 7/02

(54) **Verfahren zur Steuerung einer Windenergieanlage**
Method for controlling a wind turbine
Procédé de commande d'une éolienne

(30) Priorität: 22.09.2007 DE 102007045437
(43) Veröffentlichungstag der Anmeldung: 27.05.2009
(73) Patentinhaber: Nordex Energy GmbH, 22848 Norderstedt (DE)
(72) Erfinder: Frese, Thomas, 22844 Norderstedt (DE); Hose, Gerd, 24211 Preetz (DE); Wiese-Müller, Lars-Ulrich, 25421 Pinneberg (DE)
(74) Vertreter: Hauck Patent- und Rechtsanwälte

(56) Entgegenhaltungen:
- DE-A1-102005 034 899
- DE-C1- 19 717 059
- US-A- 4 815 936

## Beschreibung

Die vorliegende Erfindung betrifft ein Verfahren zur Steuerung einer Windenergieanlage mit einem auf einem Turm angeordneten Maschinenhaus und mit einem Rotor mit mindestens einem Rotorblatt, dessen Blatteinstellwinkel mittels einer Blatteinstelleinrichtung eingestellt werden kann, bei dem das Maschinenhaus um die Turmachse gedreht wird.

Windenergieanlagen bei denen der Blatteinstellwinkel (auch Pitchwinkel), also der Winkel des Rotorblatts gegenüber der Rotorebene, eingestellt wird, sind seit längerem bekannt. Mittels einer Blatteinstelleinrichtung kann dabei der Blatteinstellwinkel je nach auf das Blatt wirkender Windgeschwindigkeit eingestellt werden (auch Pitcheinstellung). So erfolgt bei einem Blatteinstellwinkel von 90° eine minimale Leistungsumwandlung des Windes in mechanische Energie, während bei 0° Blatteinstellwinkel eine maximale Leistungsumwandlung erfolgt. Solche Einstelleinrichtungen sind in vielen Fällen mit elektrischen oder hydraulischen Antrieben versehen. Es kann insbesondere eine eigene Einstelleinrichtung für jedes Rotorblatt einer Windenergieanlage vorgesehen sein. elektrischen oder hydraulischen Antrieben versehen. Es kann insbesondere eine eigene Einstelleinrichtung für jedes Rotorblatt einer Windenergieanlage vorgesehen sein.

Es sind auch Anlagen bekannt, bei denen mittels einer Blatteinstelleinrichtung bei Überschreiten einer maximalen Windgeschwindigkeit ein Strömungsabriß an dem Blatt und damit eine drastische Verringerung der Leistungsumwandlung erzeugt werden kann ("Active Stall"). Eingangs beschriebene Anlagen mit einer Pitchregelung und Anlagen mit einer Active-Stall-Regelung sind beispielsweise beschrieben in Erich Hau: "Windkraftanlagen", 3. Auflage, Springer Verlag 2003, S. 89ff.

Darüber hinaus ist es bekannt, das Maschinenhaus von Windenergieanlagen über einen Azimutantrieb um die Turmachse zu drehen, um die Anlage entsprechend der vorhandenen Windrichtung auszurichten und dabei den Ertrag zu optimieren. Dazu wird das Maschinenhaus so gedreht, daß es mit dem Rotor in den Wind weist. Aus dem Stand der Technik ist es auch bekannt, bei Auftreten zu hoher Windgeschwindigkeiten eine Beschädigung der Anlage durch zu große Belastung durch ein Drehen des Maschinenhauses um die Turmachse zu vermeiden.

So wird beispielsweise in DE 197 17 059 C1 für eine Active-Stall-Anlage vorgeschlagen, die Blatteinstellwinkel der Rotorblätter so einzustellen, daß die Blätter zu der Rotorebene einen Winkel von -90° einnehmen und anschließend das Maschinenhaus um 180° um die Turmachse auf die Leeseite des Turms zu schwenken. Aus EP 0 709 571 A2 ist es weiterhin bekannt, die Blatteinstellwinkel der Rotorblätter so einzustellen, daß sich der Rotor selbsttätig um die Turmachse in eine lastarme Parkstellung dreht. Schließlich wird in DE 100 58 076 A1 vorgeschlagen, bei einer ersten Windgeschwindigkeit die Blatteinstellwinkel der Rotorblätter so einzustellen, daß sie in Fahnenstellung stehen bzw. einen Strömungsabriß erzeugen. Weiter wird vorgeschlagen, bei einer zweiten, höheren Windgeschwindigkeit den Rotor um 180° um die Turmachse nach Lee zu drehen.

In DE 10 2005 034899 wird eine Windenergieanlage mit Einzelpitcheinrichtungen beschrieben, welche mit Störfalldetektoren ausgerüstet sind und im Falle eines abnormalen Betriebszustands das jeweilige Rotorblatt durch die jeweilige Einzelpitcheinrichtung in eine Abschaltposition verstellt wird.

Die bekannten Verfahren sind jedoch nur dann möglich, wenn die Blatteinstelleinrichtung problemlos arbeitet. Wenn die Blatteinstelleinrichtung dagegen versagt, sind die vorgeschlagenen Verfahren nicht mehr zuverlässig durchführbar. In diesem Fall kann es bei starker Windbelastung zu einem Übersteigen der maximal erlaubten Drehzahl des Rotors kommen. Eine solche Überdrehzahl kann auch nicht durch die bei Windenergieanlagen vorgesehene Rotorbremse unterbunden werden. Denn die Bremsleistung dieser Bremse ist nicht dafür ausgelegt, die Rotordrehzahl dauerhaft gegen starken angreifenden Wind zu verringern. Es besteht die Gefahr der Beschädigung der Rotorbremse. Hinzu kommt, daß bei einem Defekt der Blatteinstelleinrichtung die Belastung auf die Anlage und insbesondere den Rotor und seine Blätter durch den angreifenden Wind auch bei der im Stand der Technik vorgeschlagenen Parkstellung teilweise noch zu hoch ist.

Ausgehend von dem erläuterten Stand der Technik liegt der Erfindung daher die Aufgabe zugrunde, ein Verfahren der eingangs genannten Art anzugeben, mit dem bei einem Defekt der Blatteinstelleinrichtung eine Reduzierung der auf die Anlage wirkenden Lasten gewährleistet ist.

Diese Aufgabe wird durch den Gegenstand des Patentanspruchs 1 gelöst. Vorteilhafte Ausgestaltungen finden sich in den abhängigen Ansprüchen sowie der Beschreibung und den Figuren.

Die Erfindung löst die Aufgabe für das eingangs genannte Verfahren dadurch, daß die Funktion der Blatteinstelleinrichtung überwacht wird und bei Auftreten eines Fehlers der Blatteinstelleinrichtung das Maschinenhaus aus einer Betriebsstellung in eine Ruhestellung gedreht wird, in der eine gegenüber der Betriebsstellung verminderte Anströmung der bei einer Drehung des Rotors durch das mindestens eine Rotorblatt aufgespannten Fläche durch den Wind erfolgt. Erfindungsgemäß wird also die Blatteinstelleinrichtung zum Einstellen des Pitchwinkels, beispielsweise die Pitchregelung, überwacht. Wird ein Fehler der Blatteinstelleinrichtung festgestellt, wird die Gondel automatisch in die Ruhestellung verdreht. Ein Fehler ist beispielsweise dann festzustellen, wenn ein Sollwert der Blatteinstellung von einem gemessenen Istwert der Blatteinstellung in einem kritischen Maße abweicht. So kann zum Beispiel eine Grenzdifferenz zwischen Soll- und Istwert definiert werden. Wird diese Grenzdifferenz überschritten, wird ein Fehler ausgegeben. Sofern die Blatteinstelleinrichtung darüber hinaus ein Redundanzsystem aufweist, kann vorgesehen sein, daß ein Fehler erst dann ausgegeben wird, wenn auch für das Redundanzsystem ein entsprechender Fehler erkannt wird.

Liegen die Rotorblätter der Anlage in einer Ebene, spannen sie bei einer Drehung des Rotors eine in einer Ebene liegende Fläche auf, insbesondere eine Kreisfläche. Sind die Rotorblätter dagegen nicht in einer Ebene angeordnet, spannen sie bei einer Drehung des Rotors entsprechend eine nichtebene Fläche auf, beispielsweise eine Kegelfläche.

Das Maschinenhaus wird aus einer Betriebsstellung, in der es sich zum Zeitpunkt des Auftretens des Fehlers der Blatteinstelleinrichtung befindet, in eine Ruhestellung verdreht. In der Ruhestellung wird die bei einer Rotordrehung durch die Rotorblätter aufgespannte gedachte Fläche gegenüber der Betriebsstellung weniger stark durch den Wind angeströmt. In der Ruhestellung wird die aerodynamische Leistungsaufnahme des Rotors also verringert, indem die effektive Rotorfläche bezogen auf die Windrichtung verkleinert wird. Die Gondel wird also aus dem Wind verfahren. Die Belastung der Rotorblätter und damit des Rotors und der übrigen Anlagenkomponenten wird in der Ruhestellung somit ebenfalls vermindert. Auf diese Weise ist sichergestellt, daß es auch bei einem Defekt der Blatteinstelleinrichtung nicht zu kritischen Drehzahlen des Rotors und damit möglicherweise einer Beschädigung der Anlage kommen kann.

Der Rotor kann mindestens zwei und insbesondere drei Rotorblätter aufweisen. Die Blatteinstelleinrichtung kann eine Regeleinrichtung zum Regeln des Blatteinstellwinkels umfassen. Dabei kann jedem Blatt eine eigene Blatteinstelleinrichtung zugeordnet sein. Es kann dann vorgesehen sein, daß sämtliche dieser Einrichtungen überwacht werden. Für das Auslösen der Drehung des Maschinenhauses in die Ruhestellung kann es dann ausreichend sein, wenn die Einstelleinrichtung für mindestens ein Blatt einen Fehler aufweist.

Das Maschinenhaus kann in der Ruhestellung belassen werden, solange der Fehler der Blatteinstelleinrichtung andauert. Es kann vorgesehen sein, daß die Drehung der Gondel in die Ruhestellung nicht erfolgt, wenn ein zum Drehen möglicherweise genutzter Azimutantrieb fehlerhaft ist, sich im Handbetrieb befindet, oder aus anderen Gründen gesperrt ist, beispielsweise wenn ein manueller Stop vorliegt. Außerdem kann die Drehung des Maschinenhauses in die Ruhestellung unterbunden werden wenn die Windgeschwindigkeit, beispielsweise ihr Mittelwert, unter einen für das Drehen des Maschinenhauses (Yawen) erforderlichen Wert fällt.

Obgleich die Blatteinstelleinrichtung in dem vorliegenden Zusammenhang beispielhaft als Pitchregelung bezeichnet wird, kann es sich dabei grundsätzlich natürlich auch um eine Active-Stall-Blatteinstelleinrichtung handeln.

Mögliche Beschädigungen von Anlagenkomponenten durch den Wind bei einem Fehler der Blatteinstelleinrichtung werden besonders sicher vermieden, wenn in der Ruhestellung eine minimale Anströmung der bei einer Drehung des Rotors durch das mindestens eine Rotorblatt aufgespannten Fläche durch den Wind erfolgt. Die Gondel wird bei dieser Ausgestaltung insbesondere so aus dem Wind verfahren, daß die Drehachse des Rotors einen Winkel zur Windrichtung von 90° aufweist. Die aerodynamische Leistungsaufnahme des Rotors wird also minimiert, indem die effektive Rotorfläche bezogen auf die Windrichtung minimiert wird.

Gemäß einer weiteren Ausgestaltung der Erfindung kann das Maschinenhaus zum Verdrehen in die Ruhestellung aus seiner Betriebsstellung um 90° um die Turmachse gedreht werden. Bei dieser Ausgestaltung befindet sich die Gondel also in einer Position, in der die bei einer Drehung des Rotors durch die Rotorblätter aufgespannte Fläche maximal vom Wind angeströmt wird. In dieser normalerweise eingenommenen Betriebsstellung steht der Wind also senkrecht auf der Rotorebene, sofern die Drehachse des Rotors horizontal liegt. Die Drehachse des Rotors (bzw. die Längsrichtung des Maschinenhauses) liegt dann parallel zur Windrichtung. In der um 90° gedrehten Ruhestellung liegt eine horizontale Drehachse des Rotors dagegen senkrecht zur Windrichtung. Der sogenannte Gierwinkel beträgt in diesem Fall 90°. In dieser um 90° um die Turmachse gedrehten Stellung ist die Anströmung der durch die Rotorblätter bei einer Drehung um die Rotorachse aufgespannten Fläche durch den Wind minimal. Bei dieser Ausgestaltung wird die Gondel also auf dem kürzesten Weg aus dem Wind gedreht. Die auftretenden Belastungen werden so möglichst gering gehalten.

Eine weitere Ausgestaltung sieht vor, daß das Maschinenhaus nur in die Ruhestellung gedreht wird, wenn zusätzlich der Blatteinstellwinkel mindestens eines Rotorblatts kleiner als ein vorgegebener Grenzblatteinstellwinkel ist. Bei dieser Ausgestaltung muß für ein Drehen in die Ruhestellung neben einem Fehler der Blatteinstelleinrichtung also eine weitere Bedingung vorliegen, nämlich ein Unterschreiten eines Grenzblatteinstellwinkels für mindestens ein Rotorblatt. Die Leistungsaufnahme durch das Rotorblatt ist maximal bei einem Blatteinstellwinkel bzw. Pitchwinkel von 0° und minimal bei einem Blatteinstellwinkel von 90°. Gemäß dieser Ausgestaltung findet ein Drehen in die Ruhestellung bei einem Fehler der Blatteinstelleinrichtung also nur statt, wenn aufgrund des anliegenden Pitchwinkels eine kritische, insbesondere erhebliche Belastung durch den Wind vorliegt. Bei mehreren Rotorblättern ist es dabei ausreichend, wenn für eines der Rotorblätter der Pitchwinkel kleiner als der Grenzpitchwinkel ist. Eine besonders praxisgemäße Ausgestaltung sieht vor, daß der Grenzblatteinstellwinkel bzw. Grenzpitchwinkel 60° beträgt.

In besonders einfacher und zuverlässiger Weise kann das Maschinenhaus durch einen Azimutantrieb der Windenergieanlage, also motorisch, in die Ruhestellung gedreht werden. Dabei kann vorgesehen sein, daß die Gondel nur in die Ruhestellung gedreht wird, wenn sich der Azimutantrieb im Produktionsbetrieb befindet. Insbesondere ist im Service-Modus des Azimutantriebs eine automatische Drehung der Gondel in die Ruhestellung nicht möglich.

Eine weitere besonders bevorzugte Ausgestaltung sieht vor, daß das Maschinenhaus in der Ruhestellung bei einer Änderung der Windrichtung insbesondere kontinuierlich nachgeführt wird, so daß wieder eine gegenüber der Betriebsstellung verminderte, und vorzugsweise eine minimale Anströmung der bei einer Drehung des Rotors durch das mindestens eine Rotorblatt aufgespannten Fläche durch den Wind erfolgt. Bei dieser Ausgestaltung wird das Maschinenhaus also bei einer Änderung der Windrichtung ebenfalls in entsprechender Weise gedreht, so daß die für den Wind effektive Rotorfläche wieder verringert bzw. minimal ist. Es wird also sichergestellt, daß auch bei einer Windänderung während des Andauerns des Pitchfehlers keine Gefahr für die Sicherheit der Anlage besteht. Zur Messung der Windrichtung können geeignete Windmeßgeräte vorgesehen sein. Die Nachführung kann unterbrochen werden, wenn ein beispielsweise zur Nachführung genutzter Azimutantrieb gesperrt ist, beispielsweise fehlerhaft ist, ein manueller Stop eines solchen Azimutantriebs vorliegt, dieser beispielsweise nicht im Produktionsbetrieb sondern im Service-Modus geschaltet ist oder die Windgeschwindigkeit unter einen für das Drehen des Maschinenhauses erforderlichen Wert fällt.

Das Nachführen bei einer Änderung der Windrichtung kann gemäß einer besonders praxisgemäßen Ausgestaltung durch einen Azimutantrieb der Windenergieanlage, also motorisch, erfolgen.

Ein Ausführungsbeispiel der Erfindung wird nachfolgend anhand einer Zeichnung näher erläutert. Es zeigen schematisch:
- Fig. 1: eine Windenergieanlage in einer Draufsicht in ihrer Betriebsstellung,
- Fig. 2: die Windenergieanlage aus Fig. 1 in einer Draufsicht in ihrer Ruhestellung.

In den Figuren bezeichnen gleiche Bezugszeichen gleiche Gegenstände. In den Figuren ist eine Windenergieanlage mit einem auf einem Turm 1 angeordneten Maschinenhaus 2 dargestellt. An dem Maschinenhaus 2 ist ein Rotor 3 mit in dem dargestellten Beispiel drei lediglich äußerst schematisch dargestellten Rotorblättern 4 angebracht. Der Blatteinstellwinkel der Rotorblätter 4 kann mittels einer nicht näher dargestellten Blatteinstelleinrichtung (Pitchregelung) eingestellt und geregelt werden. Dabei ist jedem Rotorblatt 4 eine eigene Blatteinstelleinrichtung zugeordnet.

In dem dargestellten Beispiel sind die Rotorblätter 4 im wesentlichen in einer Ebene E angeordnet. Bei ihrer Drehung um die Rotorachse spannen sie eine kreisförmige Fläche auf, die ebenfalls im wesentlichen in der Ebene E liegt. Die Drehachse des Rotors 3 ist in den Figuren mit dem Bezugszeichen 5 bezeichnet. Mittels eines nicht näher dargestellten Azimutantriebs kann das Maschinenhaus 2 um die Turmachse gedreht werden. Die Richtung des auf die Windenergieanlage treffenden Windes ist in den Figuren schematisch durch den Pfeil 6 veranschaulicht.

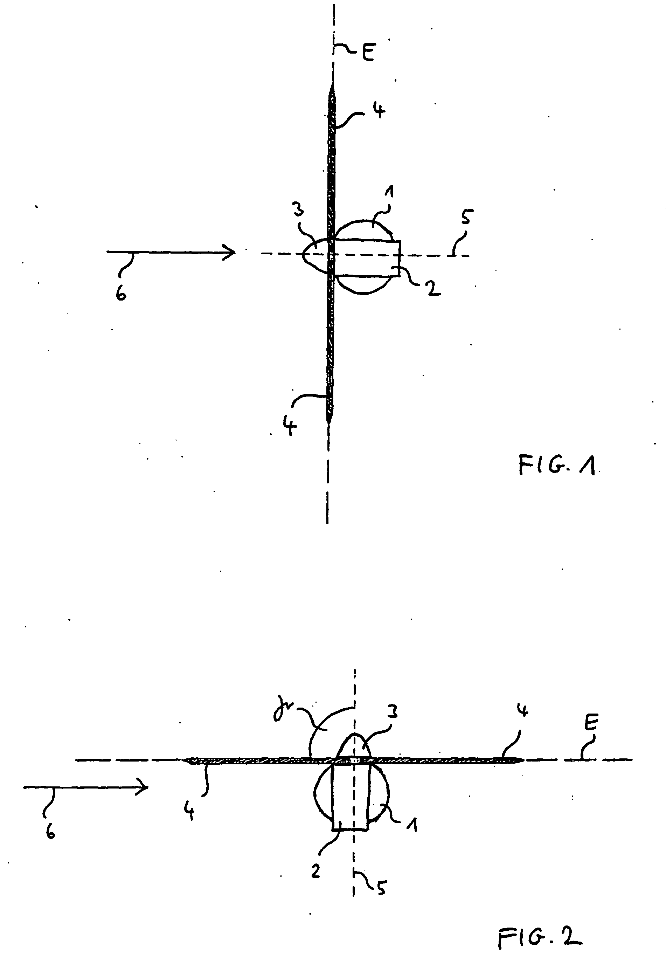

In Fig. 1 ist die Windenergieanlage in ihrer Betriebsstellung dargestellt. In dieser Stellung liegt die durch die Drehung der Rotorblätter 4 um die Rotorachse aufgespannte Fläche senkrecht zur Windrichtung 6. Die Drehachse 5 des Rotors 3, die parallel zur Längsachse der Gondel 2 ist, liegt in dieser Stellung parallel zur Windrichtung 6. In dieser Betriebsstellung ist die effektive Rotorfläche bezogen auf die Windrichtung 6 maximiert. Die aerodynamische Leistungsaufnahme ist in dieser Stellung also maximal. Je nach Stärke des angreifenden Windes werden die Einstellwinkel der Rotorblätter 4 mittels der Blatteinstelleinrichtung eingestellt.

Im Betrieb der Anlage werden die Blatteinstelleinrichtung und insbesondere der Blatteinstellwinkel laufend überwacht. Sofern für mindestens eines der Rotorblätter 4 eine Differenz zwischen dem Soll-Blatteinstellwinkel und dem gemessenen Ist-Blatteinstellwinkel einen vorgegebenen Grenzwert übersteigt, und sofern dies auch für eine für die Rotorblätter 4 gegebenenfalls vorgesehene Redundanzblatteinstelleinrichtung zutrifft, wird ein Fehler der Blatteinstelleinrichtung ausgegeben. Sofern darüber hinaus der Blatteinstellwinkel (Pitchwinkel) mindestens eines Rotorblatts kleiner als ein Grenzblatteinstellwinkel von 60° ist, wird das Drehen der Gondel 2 in eine Ruhestellung veranlasst. Gegebenenfalls können weitere Bedingungen vorgegeben sein, die erfüllt sein müssen, damit das Drehen in die Ruhestellung erfolgt. Eine weitere Bedingung ist beispielsweise, daß die Windgeschwindigkeit nicht unter einen für das Drehen des Maschinenhauses 2 erforderlichen Wert gefallen ist. In dem dargestellten Beispiel erfolgt das Drehen des Maschinenhauses 2 in die Ruhestellung motorisch mittels des Azimutantriebs der Windenergieanlage.

Die Ruhestellung des Maschinenhauses 2 ist in Fig. 2 dargestellt. Es ist zu erkennen, daß das Maschinenhaus 2 zum Verdrehen in die Ruhestellung aus der in Fig. 1 dargestellten Betriebsstellung um einen Winkel γ von 90° um die Turmachse gedreht wurde. Die Drehachse 5 des Rotors steht in dieser Ruhestellung senkrecht zur Windrichtung 6. Die bei einer Drehung des Rotors von den Rotorblättern 4 aufgespannte Fläche liegt parallel zur Windrichtung 6. Während in der Betriebsstellung eine maximale Anströmung der durch eine Drehung der Rotorblätter 4 um die Rotorachse aufgespannten Fläche durch den Wind erfolgt, ist die Anströmung der bei einer Rotordrehung durch die Blätter 4 aufgespannten Fläche in der in Fig. 2 dargestellten Ruhestellung minimal. In dieser Ruhestellung ist die aerodynamische Leistungsaufnahme des Rotors 3 minimiert, indem die für den Wind effektive Rotorfläche minimiert ist. In dieser Stellung ist also sichergestellt, daß es auch bei einer defekten Blatteinstelleinrichtung nicht zu die Anlage möglicherweise beschädigenden Überdrehzahlen oder anderweitigen übermäßigen Belastungen kommt. Die Gondel 2 bleibt in dieser Ruhestellung, solange der Fehler der Blatteinstelleinrichtung andauert.

In dem dargestellten Beispiel wird das Maschinenhaus 2 bei einer Änderung der Windrichtung 6 mittels des Azimutantriebs so nachgeführt, daß wieder eine minimale Anströmung der durch die Drehung der Rotorblätter 4 um die Rotorachse aufgespannten Fläche durch den Wind erfolgt. In dem dargestellten Beispiel sind Windmeßgeräte vorgesehen, die die Windrichtung messen. Wird eine Änderung der Windrichtung 6 festgestellt, wird das Maschinenhaus 2 der Windenergieanlage dem Wind entsprechend nachgeführt. Somit ist sichergestellt, daß bei einer Änderung der Windrichtung 6 eine wirksame Reduzierung der auf die Anlage wirkenden Lasten gewährleistet ist.

## Patentansprüche

1. Verfahren zur Steuerung einer Windenergieanlage mit einem auf einem Turm angeordneten Maschinenhaus und mit einem Rotor mit mindestens einem Rotorblatt, dessen Blatteinstellwinkel mittels einer Blatteinstelleinrichtung eingestellt werden kann,
bei dem das Maschinenhaus um die Turmachse gedreht wird,
**dadurch gekennzeichnet, daß** die Funktion der Blatteinstelleinrichtung überwacht wird und bei Auftreten eines Fehlers der Blatteinstelleinrichtung das Maschinenhaus (2) aus einer Betriebsstellung in eine Ruhestellung gedreht wird, in der eine gegenüber der Betriebsstellung verminderte Anströmung der bei einer Drehung des Rotors durch das mindestens eine Rotorblatt (4) aufgespannten Fläche durch den Wind erfolgt.

2. Verfahren nach Anspruch 1, **dadurch gekennzeichnet, daß** in der Ruhestellung eine minimale Anströmung der bei einer Drehung des Rotors durch das mindestens eine Rotorblatt (4) aufgespannten Fläche durch den Wind erfolgt.

3. Verfahren nach Anspruch 2, **dadurch gekennzeichnet, daß** das Maschinenhaus (2) zum Verdrehen in die Ruhestellung aus seiner Betriebsstellung um 90° um die Turmachse gedreht wird.

4. Verfahren nach einem der Ansprüche 1 bis 3, **dadurch gekennzeichnet, daß** das Maschinenhaus (2) nur in die Ruhestellung gedreht wird, wenn zusätzlich der Blatteinstellwinkel mindestens eines Rotorblatts (4) kleiner als ein vorgegebener Grenzblatteinstellwinkel ist.

5. Verfahren nach Anspruch 4, **dadurch gekennzeichnet, daß** der Grenzblatteinstellwinkel 60° beträgt.

6. Verfahren nach einem der vorhergehenden Ansprüche, **dadurch gekennzeichnet, daß** das Maschinenhaus (2) durch einen Azimutantrieb der Windenergieanlage in die Ruhestellung gedreht wird.

7. Verfahren nach einem der vorhergehenden Ansprüche, **dadurch gekennzeichnet, daß** das Maschinenhaus (2) in der Ruhestellung bei einer Änderung der Windrichtung (6) nachgeführt wird, so daß wieder eine gegenüber der Betriebsstellung verminderte Anströmung der bei einer Drehung des Rotors durch das mindestens eine Rotorblatt (4) aufgespannten Fläche durch den Wind erfolgt.

8. Verfahren nach Anspruch 7, **dadurch gekennzeichnet, daß** das Nachführen durch einen Azimutantrieb der Windenergieanlage erfolgt.

## Claims

1. A method for controlling a wind turbine with a nacelle disposed on a tower and with a rotor having at least one rotor blade, the pitch angle of which can be adjusted by means of a pitch adjusting device,
in which the nacelle is rotated about the tower axis, **characterized in that** the function of the pitch adjusting device is monitored, and in the case of a malfunction of the pitch adjusting device, the nacelle (2) is rotated from an operating position into a rest position, in which compared to the operating position a reduced incident flow of the wind onto the surface spanned by the at least one rotor blade (4) during a rotation of the rotor occurs.

2. The method according to claim 1, **characterized in that** in the rest position a minimum incident flow of the wind onto the surface spanned by the at least one rotor blade (4) during a rotation of the rotor occurs.

3. The method according to claim 2, **characterized in that** for turning into the rest position, the nacelle (2) is rotated from its operating position by 90° about the tower axis.

4. The method according to one of the claims 1 to 3, **characterized in that** the nacelle (2) is rotated only into the rest position, if in addition, the pitch angle of at least one rotor blade (4) is less than a preset limit pitch angle.

5. The method according to claim 4, **characterized in that** the limit pitch angle amounts to 60°.

6. The method according to one of the preceding claims, **characterized in that** the nacelle (2) is rotated into the rest position by an azimuth drive of the wind turbine.

7. The method according to one of the preceding claims, **characterized in that** the nacelle (2) in the rest position is tracked during a change of the wind direction (6) so that again compared to the operating position a reduced incident flow of the wind onto the surface spanned by the at least one rotor blade (4) during a rotation of the rotor occurs.

8. The method according to claim 7, **characterized in that** the tracking is performed using an azimuth drive of the wind turbine.

## Revendications

1. Procédé de commande d'une éolienne avec une nacelle disposée sur une tour et avec un rotor comprenant au moins une pale de rotor dont l'angle de réglage de pale peut être réglé au moyen d'un dispositif de réglage de pale,
lors duquel la nacelle est tournée autour de l'axe de tour,
**caractérisé en ce que** la fonction du dispositif de réglage de pale est surveillée et, en cas de survenue d'une erreur du dispositif de réglage de pale, la nacelle (2) est tournée d'une position de service dans une position de repos, dans laquelle un afflux réduit par rapport à la position de service de la surface couverte lors d'une rotation du rotor par l'au moins une pale de rotor (4) est effectué par le vent.

2. Procédé selon la revendication 1, **caractérisé en ce qu'**un afflux minimal de la surface couverte lors d'une rotation du rotor par l'au moins une pale de rotor (4) est effectué par le vent dans la position de repos.

3. Procédé selon la revendication 2, **caractérisé en ce que** la nacelle (2) est tournée de 90° autour de l'axe de tour pour la rotation dans la position de repos depuis sa position de service.

4. Procédé selon l'une quelconque des revendications 1 à 3, **caractérisé en ce que** la nacelle (2) n'est tournée que dans la position de repos lorsque l'angle de réglage de pale d'au moins une pale de rotor (4) est en outre inférieur à un angle de réglage de pale limite prédéfini.

5. Procédé selon la revendication 4, **caractérisé en ce que** l'angle de réglage de pale limite est de 60°.

6. Procédé selon l'une quelconque des revendications précédentes, **caractérisé en ce que** la nacelle (2) est tournée dans la position de repos par un entraînement azimutal de l'éolienne.

7. Procédé selon l'une quelconque des revendications précédentes, **caractérisé en ce que** la nacelle (2) est orientée dans la position de repos lors d'une modification du sens du vent (6) de sorte qu'un afflux réduit par rapport à la position de service de la surface couverte lors d'une rotation du rotor par l'au moins une pale de rotor (4) est de nouveau effectué par le vent.

8. Procédé selon la revendication 7, **caractérisé en ce que** l'orientation s'effectue par un entraînement azimutal de l'éolienne.
